# EUROPEAN PATENT APPLICATION

(11) **EP 4 707 256 A1**
(43) Date of publication of application: **11.03.2026**
(21) Application number: 24208183.4
(22) Date of filing: 22.10.2024
(51) Int. Cl.: C04B 20/02

(54) **METHOD FOR THE REDUCTION OF THE TOTAL ALKALI CONTENT, THE CHLORIDE CONTENT AND/OR THE SULPHATE CONTENT OF SOLID FEEDSTOCKS**

(30) Priority: 09.09.2024 EP 24199355
(71) Applicant: Carbon Upcycling Technologies Inc., Calgary, AB T2P 3N9 (CA)
(72) Inventor: The designation of the inventor has not yet been filed
(74) Representative: Brigou, Ben Guido

(57) **Abstract**

The present invention relates to a method for the reduction of the total alkali content of solid feedstocks employing mild temperature aqueous leaching in the presence of a leaching agent of formula XO and/or X(OH)₂ wherein X is an alkaline earth metal. The invention further relates to the solid material having reduced total alkali content obtainable from the method. The invention further relates to uses of the solid material, for example as a filler. The invention further relates to compositions comprising the solid material and a further material selected from the group consisting of asphalt, cement, geopolymers, polymers and combinations thereof. The invention further relates to a method for preparing concrete.

## Description

### FIELD OF THE INVENTION

The present invention relates to a method for the reduction of the total alkali content, the chloride content and/or the sulphate content of solid feedstocks. The invention further relates to the solid material having reduced total alkali content, chloride content and/or sulphate content obtainable from the method. The invention further relates to uses of the solid material, for example as a filler or supplementary cementitious material. The invention further relates to compositions comprising the solid material and a further material selected from the group consisting of asphalt, cement, geopolymers, polymers and combinations thereof. The invention further relates to a method for preparing concrete.

### BACKGROUND ART

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are typically called supplementary cementitious materials and are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for CO₂ emissions in the cement industry are not sufficient to ensure the necessary mitigation in a scenario of increasing cement demand. Currently, cement production is increasing due to a combination of increasing urbanization and replacement of old infrastructure.

Glass waste, such as post-consumer-glass waste has been explored as cement replacement. However its high alkali content (in particular sodium but also potassium) makes it unsuitable for most concrete applications. It may also have too high chloride and/or sulphate content.

Hence, there remains a need to develop affordable filler technology which can reduce cement use and which does not detrimentally affect the properties of concrete. Ideally such filler technology can act as supplementary cementitious material such that large cement replacement rates can be achieved.

Research has been conducted to reduce the sodium or total alkali levels of glass. However, most of this research stems from the glass industry aiming to make high-value glass products for special applications. The methods are generally too unsafe to practice at large scale and too expensive to treat glass waste with the end goal of using it as a filler in concrete (which is a relatively low value application).

JP2018118229A describes sodium leaching at high temperatures by adding chlorine gas + a Ca source, forming calcium chloride which exchanges with sodium in the glass to form sodium chloride in solution and calcium silicate in the glass. This method requires the use of highly toxic chlorine gas and associated specialized equipment.

WO2023283746A1 (examples) shows that extensive HCl leaching of glass only reduces the sodium content by about 30%.

JP2019108251A describes a method in which sodium is removed from glass by mixing said glass with a calcium-containing chloride and a calcium-containing compound selected from calcium hydroxide, calcium carbonate and calcium oxide. The method is a solid-state reaction performed at 550-950 °C.

JP2018158324A describes the removal of sodium from sodium-containing glass by mixing said glass with a calcium source and a chloride- or sulfate source. The method is a solid-state reaction performed at 600-1300 °C followed by a washing step.

It is an object of the present invention to provide improved methods for reducing the total alkali content, the chloride content and/or the sulphate content of solid feedstocks, such as glass and in particular soda-lime glass waste.

It is a further object of the present invention to provide improved fillers for cement, geopolymer or asphalt binder, in particular fillers capable of acting as a supplementary cementitious material.

It is a further object of the present invention to provide improved fillers for cement, geopolymer or asphalt binder which improve the properties of the resulting concrete, such as the compressive strength, the strength activity index and/or the water demand.

It is a further object of the present invention to provide improved fillers for cement, geopolymer or asphalt binder which reduce the alkali-silica reaction.

### DESCRIPTION OF THE INVENTION

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

As used herein total alkali content is expressed in wt.% and refers to the sodium oxide equivalent wt.%, calculated as Na₂O wt.% + 0.658*K₂O wt.%. In accordance with the invention, the sodium oxide and potassium oxide content of the material is determined by measuring the Na and K content by X-Ray Fluorescence (XRF) and converting the measured Na and K content to oxides wherein Na₂O wt.% = 1.348*Na wt.% and K2O wt.% = 1.205*K wt.%. Preferably, XRF is performed using a PANalytical^{®} Epsilon 4 or an instrument of equal or better sensitivity. The wt.% is by total weight of the material concerned.

In accordance with the invention, the D10, D50 and D90 particle size distribution characteristics referred to herein as well as the specific surface area (unless explicitly mentioned to be BET surface area) are determined by measuring with a laser light scattering particle size analyzer utilizing the Mie theory of light scattering, such as the Brookhaven laser particle sizer, Model Microbrook 2000LD or another instrument of equal or better sensitivity and reporting the data using a volume equivalent sphere model. As is known to the skilled person, the D50 is the volume median diameter, i.e. the diameter at which 50% of a sample's volume is comprised of smaller particles. Similarly, the D10 and D90 represent the diameter at which 10 or 90% of a sample's volume is comprised of smaller particles.

As used herein the term "slags" refers to any slag from ferrous metal production, non-ferrous metal production or phosphorus production. In the context of the present invention a slag is preferably selected from a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag. The slag is preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag from iron or steel production, most preferably a BOF slag or an EAF slag.

As used herein the term "ashes" refers to any ash recovered from an incineration process, including a bottom ash and/or a fly ash. The ash is preferably a fly ash. The ash is preferably from biomass incineration or waste (such as household waste) incineration.

The moisture content of the solid materials referred to herein refers to the moisture content determined by oven-drying the material at 150 °C until constant weight and comparing the initial weight with the dry weight.

The present inventors have found a method for the reduction of the total alkali content, the chloride content and/or the sulphate content of a silica-based solid feedstock comprising the steps of
(i) mixing the silica-based solid feedstock with water and a leaching agent to provide a reaction mixture;
(ii) heating the reaction mixture to a temperature within the range of 60-400 °C; and
(iii) subjecting the reaction mixture to a solid-liquid separation and recovering the resulting solid material;
wherein the leaching agent is selected from XO and/or X(OH)₂, wherein X is selected from alkaline earth metals, preferably X is Ca and/or Mg. The inventors have observed that next to a large reduction in total alkali content there is also significant chloride and sulphate content reduction. Hence, the method may be applied for the reduction of chloride and/or sulphate content, instead of or alongside with total alkali content reduction. In highly preferred embodiments, the method is for the reduction of the total alkali content of a silica-based solid feedstock.

### The leaching agent provided in step (i) and preparation of the reaction mixture

As will be understood by the skilled person, preferably the leaching agent is thus selected from CaO, MgO, Ca(OH)₂, Mg(OH)₂ and combinations thereof.

The leaching agent may be provided for mixing with the silica-based solid feedstock in step (i) in the form of a solid composition comprising the leaching agent, and/or in the form of an aqueous solution or suspension comprising the leaching agent. Said solid composition comprising the leaching agent may consist essentially of the leaching agent. However, the present inventors have surprisingly found that in order to successfully perform the method of the invention, the leaching agent does not need to be provided as a pure chemical compound but can also be (wholly or in part) provided in the form of a composition which comprises the leaching agent mixed with other materials, such as a waste material comprising significant amounts of the leaching agent. This is explained in more detail elsewhere in the present description. Thus, in embodiments of the invention step (i) comprises providing the leaching agent in the form of a solid composition comprising the leaching agent, and/or in the form of an aqueous solution or suspension comprising the leaching agent.

In highly preferred embodiments of the invention X is Ca. In other words, the leaching agent is CaO and/or Ca(OH)₂. CaO and Ca(OH)₂ are common chemicals which are available in various grades of purity, including essentially pure form. However, the present inventors have surprisingly found that in order to successfully perform the method of the invention, the CaO and/or Ca(OH)₂ does not need to be provided as a pure chemical compound but can also be (wholly or in part) provided in the form of a composition which comprises the CaO and/or Ca(OH)₂ mixed with other materials, such as a waste material comprising significant amounts of CaO and/or Ca(OH)₂. Particularly interesting compositions comprising CaO and/or Ca(OH)₂ (particularly CaO) for use in the methods of the present invention are cement bypass dust, cement kiln dust, lime kiln dust, ashes, and slags. As is known to the skilled person, solutions or suspensions prepared from CaO typically comprise a mixture of CaO and Ca(OH)₂ due to hydration of the CaO.

In most preferred embodiments of the invention the leaching agent is selected from XO wherein X is Ca and/or Mg, preferably the leaching agent is CaO.

In embodiments of the invention step (i) comprises providing at least part of the total amount of the leaching agent used in the form of a solid composition comprising XO and X(OH)₂ in a total combined amount of at least 90 wt.%, preferably at least 93 wt.%, more preferably at least 95 wt.%, or an aqueous solution or suspension thereof. For example, high purity grades of XO and/or X(OH)₂ can be used.

In preferred embodiments of the invention step (i) comprises providing at least part of the total amount of the leaching agent used in the form of a solid composition comprising CaO and/or Ca(OH)₂ in a total combined amount of at least 80 wt.%, by weight of the solid composition, preferably at least 90 wt.%, more preferably at least 95 wt.%, or an aqueous solution or suspension thereof. For example, high purity grades of CaO and/or Ca(OH)₂ can be used.

In preferred embodiments of the invention step (i) comprises providing at least part of the total amount of the leaching agent used in the form of a solid composition comprising XO and/or X(OH)₂ in a total combined amount of 1-85 wt.%, by weight of the solid composition, preferably 15-80 wt.%, more preferably 30-80 wt.%, or an aqueous solution or suspension thereof, preferably wherein X is Ca. In more preferred embodiments of the invention step (i) thus comprises providing at least part of the total amount of the leaching agent used in the form of a solid composition comprising CaO and/or Ca(OH)₂ in a total combined amount of 1-85 wt.%, preferably 15-80 wt.%, more preferably 30-80 wt.%, or an aqueous solution or suspension thereof. For example, cement bypass dust, cement kiln dust, lime kiln dust, ashes or slags can be used. Thus, in embodiments of the invention step (i) comprises providing at least part of the total amount of the leaching agent used in the form of a solid composition comprising XO and/or X(OH)₂ in a total combined amount of 1-85 wt.%, by weight of the solid composition, preferably 15-80 wt.%, more preferably 30-80 wt.%, or an aqueous solution or suspension thereof, preferably wherein X is Ca, and wherein said solid composition is selected from cement bypass dust, cement kiln dust, lime kiln dust, ashes or slags. Particularly preferred are steelmaking slags having a CaO and/or Ca(OH)₂ content as recited herein, or cement bypass dust.

In preferred embodiments of the invention step (i) comprises providing at least part of the total amount of the leaching agent used in the form of a solid composition comprising CaO in a total combined amount of 1-85 wt.%, by weight of the solid composition, preferably 15-80 wt.%, more preferably 30-80 wt.%, or an aqueous solution or suspension thereof. For example, cement bypass dust, cement kiln dust, lime kiln dust, ashes or slags can be used. Thus, in embodiments of the invention step (i) comprises providing at least part of the total amount of the leaching agent used in the form of a solid composition comprising CaO in a total combined amount of 1-85 wt.%, by weight of the solid composition, preferably 15-80 wt.%, more preferably 30-80 wt.%, or an aqueous solution or suspension thereof, wherein said solid composition is selected from cement bypass dust, cement kiln dust, lime kiln dust, ashes or slags. Particularly preferred are steelmaking slags having a CaO content as recited herein, or cement bypass dust. Materials comprising 30-80 wt.% CaO and/or Ca(OH)₂, preferably CaO are most preferred, for example cement bypass dust, cement kiln dust or slags having 30-80 wt.% CaO and/or Ca(OH)₂, preferably 30-80 wt.% CaO. In general, for all embodiments recited herein where the leaching agent is provided in the form of a solid composition comprising XO and/or X(OH)₂ in a total combined amount of 1-85 wt.%, by weight of the solid composition (or 15-80 wt.% or 30-80 wt.% as described herein), the solid composition is most preferably cement bypass dust. Preferred cement bypass dusts are those comprising XO and/or X(OH)₂ in a total combined amount of 40-70 wt.%, such as 45-70 wt.%, preferably those comprising CaO and/or Ca(OH)₂ in a total combined amount of 40-70 wt.%, such as 45-70 wt.%.

As will be understood from the above, it is preferred that step (i) comprises providing at least part of the total amount of the leaching agent used in the form of cement bypass dust, cement kiln dust or slag, preferably cement bypass dust. In embodiments of the invention, the total amount of leaching agent provided for mixing with the solid feedstock in step (i) may be provided in the form of cement bypass dust, cement kiln dust, lime kiln dust, ash or slag, preferably cement bypass dust.

In embodiments of the invention step (i) comprises milling the feedstock together with the leaching agent. The present inventors have found that milling the feedstock with the leaching agent before step (ii) facilitates total alkali reduction. Milling may be performed by any means. It is preferred that milling occurs in the presence of grinding or milling media, such as ball milling. Milling may be performed dry or in the presence of some or all of the water of step (i). Preferably, milling is performed at a moisture content of less than 15 wt.%, preferably less than 10 wt.%. Preferably, milling is performed dry.

In embodiments of the invention step (i) comprises providing at least part or all of the total amount of the leaching agent used in the form of a solid composition comprising the leaching agent, and step (i) comprises the steps:
(i)a mixing at least part of said solid composition comprising the leaching agent with at least part of the total amount of the silica-based solid feedstock used to provide a precursor mixture, and
(i)b adding water to the precursor mixer.
Step (i)b will typically comprise adding the remainder of the leaching agent and the remainder of the feedstock in order to provide the reaction mixture. Optional further additives may be added in step (i)a or step (i)b. In some embodiments, all components of the reaction mixture except water are present in the precursor mixture. In this way, adding water to the precursor mixture in step (i)b will provide the reaction mixture.

In preferred embodiments of the invention step (i)a further comprises submitting the precursor mixture to milling. Milling may be performed by any means. It is preferred that milling occurs in the presence of grinding or milling media, such as ball milling. Preferably the mass ratio of milling media (e.g. balls) to the combined mass of silica-based solid feedstock and solid composition comprising the leaching agent is more than 1.5:1, preferably more than 2:1.

In preferred embodiments the moisture content of the precursor mixture is less than 15 wt.%, preferably less than 10 wt.%. Step (i)a may thus comprises submitting the precursor mixture to milling, preferably ball milling, at a moisture content of is less than 15 wt.%, preferably less than 10 wt.%. Preferably milling of the precursor mixture, such as ball milling, is performed in dry state. The present inventors have found that milling of the precursor mixture at a moisture content of less than 15 wt.% is advantageous compared to wet milling as it leads to better reductions of total alkali content in the subsequent step (ii) of the method.

In alternative embodiments the solids content of the precursor mixture is less than 50 wt.%, preferably less than 30 wt.%, more preferably less than 15 wt.%. Step (i)a may thus comprises submitting the precursor mixture to milling, preferably ball milling, at a solids content of the precursor mixture is less than 50 wt.%, preferably less than 30 wt.%, more preferably less than 15 wt.%.

As is shown in the examples, it can be useful to provide a first part of the leaching agent in the form of a composition such as cement bypass dust, cement kiln dust, lime kiln dust, ash or slag, preferably cement bypass dust while providing another part of the leaching agent in the form of essentially pure CaO and/or Ca(OH)₂. Thus, in some embodiments of the invention step (i) comprises
- providing at least part of the total amount of leaching agent used in the form of a solid composition comprising XO and/or X(OH)₂ in a total combined amount of 1-85 wt.%, by weight of the solid composition, preferably 15-80 wt.%, more preferably 30-80 wt.%, or an aqueous solution or suspension thereof, preferably wherein X is Ca; and
- providing at least part of the total amount of the leaching agent used in the form of a solid composition comprising XO and X(OH)₂ in a total combined amount of at least 90 wt.%, preferably at least 93 wt.%, more preferably at least 95 wt.%, or an aqueous solution or suspension thereof, preferably wherein X is Ca.
Preferably, step (i) comprises
- providing at least part of the total amount of leaching agent used in the form of a solid composition comprising CaO and/or Ca(OH)₂ in a total combined amount of 1-85 wt.%, by weight of the solid composition, preferably 15-80 wt.%, more preferably 30-80 wt.%, or an aqueous solution or suspension thereof, wherein the solid composition is selected from cement bypass dust, cement kiln dust, lime kiln dust, ashes and slags; and
- providing at least part of the total amount of the leaching agent used in the form of a solid composition comprising CaO and Ca(OH)₂ in a total combined amount of at least 90 wt.%, preferably at least 93 wt.%, more preferably at least 95 wt.%, or an aqueous solution or suspension thereof.
More preferably, step (i) comprises
- providing at least part of the total amount of leaching agent used in the form of a solid composition comprising CaO and/or Ca(OH)₂ in a total combined amount of 1-85 wt.%, by weight of the solid composition, preferably 15-80 wt.%, more preferably 30-80 wt.%, wherein the solid composition is selected from cement bypass dust, cement kiln dust, lime kiln dust, ashes and slags, preferably cement bypass dust; and
- providing at least part of the total amount of the leaching agent used in the form of a solid composition comprising CaO and Ca(OH)₂ in a total combined amount of at least 90 wt.%, preferably at least 93 wt.%, more preferably at least 95 wt.% thereof, and
- milling a mixture of at least part of the feedstock with at least part of the leaching agent. Preferably all of the feedstock is milled together with all of the leaching agent.

In embodiments of the invention step (i) comprises providing at least part of the total amount of the leaching agent used in the form of cement bypass dust, cement kiln dust, lime kiln dust, ash or slag and step (i) comprises the steps:
(i)a mixing at least part of the cement bypass dust, cement kiln dust, lime kiln dust, ash or slag with at least part of the total amount of the silica-based solid feedstock used to provide a precursor mixture, and
(i)b adding water to the precursor mixer,
wherein step (i)a preferably further comprises submitting the precursor mixture to milling.

In embodiments of the invention step (i) comprises providing at least part of the total amount of the leaching agent used in the form of cement bypass dust, and step (i) comprises the steps:
(i)a mixing at least part of the cement bypass dust with at least part of the total amount of the silica-based solid feedstock used to provide a precursor mixture, and
(i)b adding water to the precursor mixer,
wherein step (i)a preferably further comprises submitting the precursor mixture to milling.

In preferred embodiments of the invention step (i) comprises providing at least part of the total amount of the leaching agent used in the form of cement bypass dust, and step (i) comprises the steps:
(i)a mixing at least part of the cement bypass dust with at least part of the total amount of the silica-based solid feedstock used to provide a precursor mixture, and
(i)b adding water to the precursor mixer,
wherein step (i)a further comprises submitting the precursor mixture to milling. In this method step (i)a may further comprise providing at least part of the total amount of the leaching agent used in the form of a solid composition comprising CaO and/or Ca(OH)₂ in a total combined amount of at least 90 wt.%, by weight of the solid composition, preferably at least 93 wt.%, more preferably at least 95 wt.%, and mixing said solid composition with the cement bypass dust, cement kiln dust, lime kiln dust, ash or slag, preferably with the cement bypass dust, and with the solid feedstock to obtain the precursor mixture. For the embodiments described in this paragraph it is particularly preferred that the moisture content of the precursor mixture is less than 15 wt.%, preferably less than 10 wt.%, such that milling occurs at said moisture content.

The reaction is not particularly limited with regard to the relative amounts of leaching agent and feedstock, although the inventors have found that optimal reduction of total alkali content is achieved when leaching agent and feedstock are used in roughly similar amounts.

In embodiments of the invention, the reaction mixture of step (ii) comprises the silica-based solid feedstock in an amount of 20-80 wt.%, based on dry weight of the reaction mixture, preferably 30-75 wt.%.

In embodiments of the invention, the reaction mixture of step (ii) comprises the silica-based solid feedstock and the leaching agent at a weight ratio within the range of 5:1 to 1:5, preferably within the range of 3:1 to 1:3, preferably within the range of 2:1 to 1:2.

In embodiments of the invention, the reaction mixture of step (ii) comprises at least 50% water, based on total weight of the reaction mixture, preferably at least 75 wt.% water.

### The silica-based feedstock

The silica-based feedstock may be any solid material comprising silica (SiO₂), preferably at least 30 wt.% SiO₂ by total weight of the silica-based feedstock. In embodiments of the invention, the silica-based solid feedstock has a SiO₂ content of at least 50 wt.% (by total weight of the silica-based solid feedstock), preferably at least 65 wt.%, more preferably at least 75 wt.%.

In preferred embodiments of the method described herein, the silica-based solid feedstock comprises or consists essentially of glass, diatomaceous earth, quartz, sand or flint. In more preferred embodiments of the method described herein, the silica-based solid feedstock comprises or consists essentially of soda-lime glass, lead glass, borosilicate glass, aluminosilicate glass, fused silica glass, quartz glass, or combinations thereof, preferably soda-lime glass. In highly preferred embodiments, the silica-based solid feedstock comprises or consists essentially of recycled glass, preferably recycled soda-lime glass, more preferably recycled soda-lime container glass or flat glass, most preferably recycled soda-lime container glass. "Recycled" as used in this context means that the glass is not virgin material but has been used. Typical examples are soda-lime glass bottles or jars which have been used and afterwards crushed or ground to form a recycled or waste particulate glass material which can be used as a feedstock for the method of the present invention.

Thus it will be understood that the silica-based solid feedstock is preferably a glassy solid, preferably having an amorphous content of at least 70% as determined by XRD, preferably at least 85%. In preferred embodiments of the invention the silica-based solid feedstock has a SiO₂ content of at least 65 wt.% (by total weight of the silica-based solid feedstock), preferably at least 70 wt.% and an amorphous content of at least 70% as determined by XRD, preferably at least 85%.

In preferred embodiments of the invention the silica-based solid feedstock has a total alkali content calculated as Na₂O wt.% + 0.658*K₂O wt.% of more than 3 wt.%, preferably more than 4.5 wt.%, preferably more than 6 wt.%. These high total alkali contents make the material unsuitable for direct use in concrete and thus attractive feedstocks for the method of the present invention.

In preferred embodiments of the invention the silica-based solid feedstock has a total amount of alkaline earth metal oxides and hydroxides of less than 20 wt.%, by total weight of the silica-based solid feedstock), preferably less than 15 wt.%. In preferred embodiments of the invention the silica-based solid feedstock has a total amount of alkaline earth metal oxides and hydroxides of 5-20 wt.%, by total weight of the silica-based solid feedstock), preferably 8-15 wt.%.

In some embodiments of the invention the silica-based solid feedstock has been carbonated. Carbonation may be effected by any method known to the skilled person including wet or dry carbonation methods. In embodiments, the silica-based solid feedstock has been carbonated, and carbonation has been effected by mechanochemical carbonation. In highly preferred embodiments of the invention the silica-based solid feedstock is obtainable by a mechanochemical carbonation method which comprises subjecting the silica-based solid feedstock to milling while contacting a gas comprising at least 0.5 vol% CO₂, such as at least 4 vol% CO₂. Such mechanochemical carbonation method is preferably executed on substantially dry material, in other words not on a slurry or suspension of the solid material. The moisture content of the substantially dry material is preferably less than 30 wt.%, more preferably less than 20 wt.%.

A preferred silica-based solid feedstock for use in the methods of the invention are glass fines, which may be fines from any of the glass materials described herein but preferably from soda-lime glass. The glass fines preferably have a particle size distribution such that at least 95 wt.%, preferably about 100 wt.%, passes through a sieve with aperture size of 1 mm, preferably a sieve with aperture size of 0.5 mm. The glass fines may optionally have been carbonated.

The glass fines can be used as such. Depending on the size of the fines and with a view to use of the final product obtained from the present method as a cement filler it may be desirable to reduce the particle size of the glass fines in orderto provide the solid feedstock (e.g. by milling). In embodiments of the invention the silica-based solid feedstock has one, two, or three, preferably three, of the following characteristics:
- a D10 within the range of 0.01-70 µm, preferably 0.1-50 µm, most preferably 1-30 µm;
- a D50 within the range of 0.1-250 µm, preferably 0.5-150 µm, most preferably 5-120 µm;
- a D90 within the range of 0.5-2000 µm, preferably 1-1500 µm, most preferably 10-1200 µm.

In some embodiments of the invention, the solid feedstock complies with ASTM C1866/C1866M-22.

### The reaction conditions in step (ii)

Step (ii) preferably comprises heating the reaction mixture to a temperature within the range of 60-400 °C for at least 1 minute, preferably at least 5 minutes, more preferably at least 15 minutes. Step (ii) more preferably comprises heating the reaction mixture to a temperature within the range of 90-300 °C for at least 1 minute, preferably at least 5 minutes, more preferably at least 15 minutes, preferably said temperature is within the range of 120-260 °C.

More preferably, step (ii) comprises heating the reaction mixture to a temperature within the range of 60-400 °C for at least 30 minutes, preferably at least 60 minutes. Step (ii) more preferably comprises heating the reaction mixture to a temperature within the range of 90-300 °C for at least 30 minutes, preferably at least 60 minutes, preferably said temperature is within the range of 120-260 °C.

In some embodiments, the reaction temperature is maintained for at least 90 minutes. Thus, step (ii) preferably comprises heating the reaction mixture to a temperature within the range of 60-400 °C for at least 90 minutes, preferably step (ii) comprises heating the reaction mixture to a temperature within the range of 90-300 °C for at least 90 minutes, preferably step (ii) comprises heating the reaction mixture to a temperature within the range of 120-260 °C for at least 90 minutes.

In some embodiments the temperature during step (ii) is at least 160 °C.

Thus, in some embodiments of the invention step (ii) comprises heating the reaction mixture to a temperature within the range of 160-400 °C for at least 1 minute, preferably at least 5 minutes, more preferably at least 15 minutes. In some embodiments of the invention step (ii) comprises heating the reaction mixture to a temperature within the range of 160-300 °C for at least 1 minute, preferably at least 5 minutes, more preferably at least 15 minutes, preferably said temperature is within the range of 160-260 °C. More preferably, in some embodiments of the invention step (ii) comprises heating the reaction mixture to a temperature within the range of 160-400 °C for at least 30 minutes, preferably at least 60 minutes. In some embodiments of the invention step (ii) comprises heating the reaction mixture to a temperature within the range of 160-300 °C for at least 30 minutes, preferably at least 60 minutes, preferably said temperature is within the range of 160-260 °C. As mentioned earlier, in some embodiments the reaction temperature is maintained for at least 90 minutes. Thus, in some embodiments step (ii) comprises heating the reaction mixture to a temperature within the range of 160-400 °C for at least 90 minutes, preferably step (ii) comprises heating the reaction mixture to a temperature within the range of 160-300 °C for at least 90 minutes, preferably step (ii) comprises heating the reaction mixture to a temperature within the range of 160-260 °C for at least 90 minutes.

It was found that high temperatures can be avoided with the present method while still affording high reductions in total alkali content. Thus, in highly preferred embodiments, the temperature of the reaction mixture does not exceed 400°C at any time during the method, preferably it does not exceed 300 °C at any time during the method.

The maximum reaction time for step (ii) is not particularly limited. However the inventors have found that within 4 hours complete removal of alkali content can be achieved using the methods shown in the examples, while much shorter times are envisaged if the examples are modified by e.g. stirring during the extraction or working at a higher temperature than used in the examples. Such embodiments have been described herein in detail. Thus typically step (ii) will be performed for less than 8 hours, such as less than 6 hours. In some embodiments step (ii) is performed for less than 4 hours, or less than 2 hours.

Step (ii) is preferably performed in a closed reaction vessel such as an autoclave. The reaction vessel is preferably a pressurized reaction vessel, which preferably is not actively pressurized such that the pressure in the reaction vessel is the result of pressure buildup due to the heating of the reaction mixture in step (ii).

The reaction may be performed under any atmosphere, such as but not limited to:
- an inert atmosphere (such as nitrogen or argon),
- air,
- an atmosphere comprising at least 50 vol% oxygen, such as at least 80 vol% oxygen, or
- an atmosphere comprising at least 0.5 vol% CO₂, such as at least 1 vol% CO₂ (such as a flue gas or a concentrated CO₂ stream).

In the latter case, extensive carbonation can be achieved during the total alkali reduction.

Preferably the reaction is performed under air since, as is shown in the appended examples, this can yield extremely high total alkali content reductions in the solid material. The skilled person understands that in case the reaction is performed in a closed vessel, the composition of the headspace in the vessel will change during the reaction unless it is continuously purged. Even in case the headspace is not continuously purged the reaction is considered to be performed under a specific atmosphere in case it is initiated under said atmosphere or if said atmosphere is introduced at any point during the reaction.

In embodiments of the invention step (ii) comprises mixing and/or milling.

In some embodiments step (ii) further comprises carbonating the reaction mixture.

### Recovery of the solid material in step (iii)

In step (iii), the solid material is recovered using conventional solid-liquid separation techniques which are not particularly limited, such as decantation, filtration, centrifugation, etc. Typically step (iii) comprises filtration to achieve recovery of the solid material.

One or more washing steps may be applied to reduce the total alkali metal content of the material and flush out the alkali metal ions liberated by the reaction of step (ii). Washing is typically performed using an aqueous composition such as water. In embodiments of the invention, step (iii) comprises washing the solid material with an aqueous composition such as water.

Drying of the solid material recovered in step (iii) may be performed, for example to prevent agglomeration upon long-term storage, or to condition the material for subsequent processing. Hence in embodiments of the invention, recovering the solid material in step (iii) further comprising drying the material, for example drying to a moisture content of less than 10 wt.%, preferably less than 5 wt.%, more preferably less than 2 wt.%.

Particle size of the solid material recovered in step (iii) may be optimized for applications in cement and concrete at any stage of the method. For example milling of the precursor mixture described herein earlier may be performed such that the desired particle size of the final product is achieved. Alternatively or additionally, the material may be milled as part of the recovery stage, for example after the solid-liquid separation. Hence in embodiments of the invention, recovering the solid material in step (iii) further comprising milling the material.

Hence, the material obtained from step (iii) corresponds to the solid material recovered from the solid-liquid separation which has been optionally milled and/or dried.

### Optional step (iv): further carbonation of the material recovered in step (iii)

In preferred embodiments of the invention the method further comprises a step (iv) carbonating the solid material recovered in step (iii) and recovering the carbonated material. Carbonation may be effected by any method known to the skilled person including wet or dry carbonation methods. In embodiments, the carbonation of step (iv) is effected by mechanochemical carbonation, preferably wherein the solid material recovered in step (iii) is subjected to milling while contacting a gas comprising at least 0.5 vol% CO₂, such as at least 4 vol% CO₂. Such mechanochemical carbonation method is preferably executed on substantially dry material, in other words not on a slurry or suspension of the solid material. The moisture content of the substantially dry material is preferably less than 30 wt.%, more preferably less than 20 wt.%.

As will be understood by the skilled person, in case a mechanochemical carbonation is effected as step (iv) of the method, milling the solid material to the desired particle size for use in concrete and cement applications (e.g. the preferred particle sizes described herein elsewhere) can be achieved during carbonation.

### The solid material recovered in step (iii)

The solid material recovered in step (iii) preferably has a total alkali content calculated as Na₂O wt.% + 0.658*K₂O wt.% of less than 1 wt.%, preferably less than 0.7 wt.%, preferably less than 0.5 wt.%, more preferably less than 0.3 wt.%, more preferably less than 0.1 wt.%, such as less than 0.05 wt.% or less than 0.01 wt.%. As is shown in the appended examples, a total alkali content below the detection limit of XRF can be achieved with the methods of the current invention. Thus, in some embodiments the solid material recovered in step (iii) has a total alkali content calculated as Na₂O wt.% + 0.658*K₂O wt.% of less than 0.05 wt.%, preferably less than 0.005 wt.%, more preferably less than 0.0005 wt.%.

The present inventors have found that the method of the invention also leads to reduction of the chloride content of the feedstock, which is also desirable with a view to applications in the cement and concrete sector. In embodiments of the invention the solid material recovered in step (iii) has a chloride content of less than 0.2 wt.% (by total weight of the solid material), preferably less than 0.1 wt.%.

The present inventors have found that the method of the invention also leads to reduction of the sulphate content of the feedstock, which is also desirable with a view to applications in the cement and concrete sector. In embodiments of the invention the solid material recovered in step (iii) has a sulphate content of less than 1 wt.% (by total weight of the solid material), preferably 0.2 wt.%, preferably less than 0.1 wt.%.

In preferred embodiments of the invention the solid material recovered in step (iii) contains:
- 20-60 wt.% of Ca, as determined by XRF, preferably 25-57 wt.%, more preferably 32-57 wt.%; and
- 5-25 wt.% of Si, as determined by XRF, preferably 7-20 wt.%, more preferably 9-18 wt.%.

In embodiments of the invention the solid material recovered in step (iii) and/or the carbonated material recovered in step (iv) has one, two, or three, preferably three, of the following characteristics:
- a D10 within the range of 0.01-70 µm, preferably 0.1-50 µm, most preferably 1-30 µm;
- a D50 within the range of 0.1-250 µm, preferably 0.5-150 µm, most preferably 5-120 µm;
- a D90 within the range of 0.5-2000 µm, preferably 1-1500 µm, most preferably 10-1200 µm.
In preferred embodiments of the invention the solid material recovered in step (iii) and/or the carbonated material recovered in step (iv) has one, two, or three, preferably three, of the following characteristics:
- a D10 within the range of 0.005-5 µm, preferably 0.01-2 µm, most preferably 0.1-1.5 µm;
- a D50 within the range of 0.1-50 µm, preferably 0.5-25 µm, most preferably 1-10 µm;
- a D90 within the range of 0.5-100 µm, preferably 1-50 µm, most preferably 5-25 µm.

In another aspect of the invention there is provided a solid material obtainable from step (iii) or step (iv) of the method described herein. Said solid material obtainable from the method preferably has a total alkali content calculated as Na₂O wt.% + 0.658*K₂O wt.% of less than 1 wt.%, preferably less than 0.7 wt.%, preferably less than 0.5 wt.%, more preferably less than 0.3 wt.%, more preferably less than 0.1 wt.%, such as less than 0.05 wt.% or less than 0.01 wt.%. In some embodiments the solid material obtainable from the method has a total alkali content calculated as Na₂O wt.% + 0.658*K₂O wt.% of less than 0.05 wt.%, preferably less than 0.005 wt.%, more preferably less than 0.0005 wt.%. In preferred embodiments of the invention the solid material obtainable from the method contains:
- 20-60 wt.% of Ca, as determined by XRF, preferably 25-57 wt.%, more preferably 32-57 wt.%; and
- 5-25 wt.% of Si, as determined by XRF, preferably 7-20 wt.%, more preferably 9-18 wt.%.

### Filler compositions and uses of the invention.

In another aspect of the invention there is provided a composition comprising the solid material of the invention and a further material selected from the group consisting of asphalt, cement, geopolymers, polymers, and combinations thereof, preferably cement, more preferably Portland cement.

In another aspect of the invention there is provided a method for preparing concrete, said method comprising the following steps:
(a) providing the solid material of the invention and a further material which is selected from the group consisting of asphalt, cement, geopolymers, and combinations thereof, optionally in the form of the composition of the invention wherein the further material is selected from the group consisting of asphalt, cement, geopolymers, and combinations thereof;
(b) providing a construction aggregate; and
(c) contacting, preferably mixing the solid material and the further material of step (i) with the construction aggregate of step (ii) and water.

In another aspect of the invention there is provided the use of the solid material of the invention as a filler or supplementary cementitious material in a cement blend, preferably in a Portland cement blend.

In another aspect of the invention there is provided the use of the solid material of the invention as a constituent of a cement blend, concrete and/or asphalt.

### Examples

The crushed glass waste used in the following examples has a D10 of 16.2 micron, a D50 of 76.7 micron and a D90 of 615 micron and the following characteristics (wt.% as determined by XRF):

| | |
|---|---|
| Na | 4.701 |
| Mg | 0.693 |
| Al | 0.502 |
| Si | 24.627 |
| S | 0.101 |
| Cl | 0.184 |
| Ca | 10.621 |
| Ti | 0.124 |
| V | 0.005 |
| Cr | 0.060 |
| Mn | 0.049 |
| Fe | 0.510 |
| Cu | 0.017 |
| Zn | 0.076 |
| Sr | 0.034 |
| Ag | 0.095 |
| K | 0.37 |
| **Total alkali (wt.%**)* | **6.63** |

| | |
|---|---|
| *"Calculated* as *1.348*Na* + *0.658*1.205*K* | |

The carbonated glass waste used in the following examples was prepared by inserting 5.1 kg of a crushed glass waste into a pressure cell with 150 kg of milling media (ceramic ball bearings of 10 mm size). The cell was pressurized with flue gas (CO2 : 8-10 vol%; H2 O: 18-20 vol %; O2 : 2-3 vol %; N2 : 67-72 vol %) to an initial pressure of 448 kPa, and rotated on rollers at 38 RPM for 3 days to obtain mechanochemically carbonated glass. The reaction was initiated at room temperature and no heating or cooling was applied. The ceramic bearings have an Al₂O₃ content of 92 wt.%. The carbonated glass waste obtained has the following characteristics (elemental composition in wt.% as determined by XRF):

| | |
|---|---|
| Na | 6.638 |
| Mg | 0.852 |
| Al | 0.533 |
| Si | 32.004 |
| S | 0.086 |
| Cl | 0.194 |
| Ca | 11.196 |
| Ti | 0.122 |
| V | 0.004 |
| Cr | 0.060 |
| Mn | 0.053 |
| Fe | 1.336 |
| Cu | 0.015 |
| Zn | 0.030 |
| Sr | 0.025 |
| Ag | 0.085 |
| K | 0.444 |
| **Total alkali (wt.%)*** | **9.30** |

| | |
|---|---|
| **Calculated* as *1.348*Na* + *0.658*1.205*K* | |

The cement bypass dust used has the following characteristics (elemental composition in wt.% as determined by XRF):

| | |
|---|---|
| Na | 0.88 |
| Cl | 4.48 |
| Mg | 0.65 |
| Al | 2.86 |
| Si | 3.16 |
| S | 7.79 |
| K | 3.56 |
| Ca | 45.25 |
| Ti | 0.04 |
| Mn | 0.05 |
| Fe | 2.25 |
| Cr | 0.01 |
| V | 0.01 |
| Zn | 0.03 |
| **Total alkali (wt.%)*** | **4.00** |

| | |
|---|---|
| **Calculated* as *1.348*Na* + *0.658*1.205*K* | |

### Example 1

A mixture of crushed glass waste (2.5g) and cement bypass dust (2.5 g) is placed in a Teflon lined autoclave container. Next 50mL of ultrapure water was added. The liquid to solid ratio (L/S) was 10. The autoclave cell is loaded into an oven and heated at 200°C for 4 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.106 |
| Cl | 0.102 |
| Ca | 35.148 |
| K | 0.804 |
| **Total alkali (wt.%)*** | **0.780** |

| | |
|---|---|
| **Calculated* as *1.348*Na* + *0.658*1.205*K* | |

### Example 2

A mixture of crushed glass waste (5 g) and CaO (2.8 g) is placed inside a Teflon lined autoclave container. Next 50mL of ultrapure water is added and the autoclave is sealed. The autoclave cell is loaded into an oven and heated at 200°C for 2 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.000 |
| Cl | 0.096 |
| Ca | 38.250 |
| K | 0.000 |
| **Total alkali (wt.%)*** | **0.000** |

| | |
|---|---|
| **Calculated* as *1.348*Na* + *0.658*1.205*K* | |

### Example 3

A mixture of crushed glass waste (2.5 g), cement bypass dust (2.5 g) and Ca(OH)₂ (3.7 g) is made and milled in a ball mill for 5 minutes using a ball:sample mass ratio of 3. After milling is completed, the material is loaded into a Teflon lined autoclave cell and 50mL of ultrapure water is added. The autoclave cell is loaded into an oven and heated at 200°C for 4 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.000 |
| Cl | 0.246 |
| Ca | 56.492 |
| K | 0.074 |
| **Total alkali (wt.%)*** | **0.059** |

| | |
|---|---|
| *"Calculated* as *1.348*Na* + *0.658*1.205*K* | |

Similar results were achieved using CaO instead of Ca(OH)₂ at the same molar concentration.

### Example 4

A mixture of carbonated glass waste (5 g) and CaO (2.8 g) is placed inside a Teflon lined autoclave container. Next 50mL of ultrapure water is added and the autoclave is sealed. The autoclave cell is loaded into an oven and heated at 200°C for 4 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.744 |
| Cl | 0.094 |
| Ca | 40.899 |
| K | 0.063 |
| **Total alkali (wt.%)*** | **1.05** |

| | |
|---|---|
| *"Calculated* as *1.348*Na* + *0.658*1.205*K* | |

### Example 5

A mixture of carbonated glass waste (5 g) and Ca(OH)₂ (3.7 g) is placed inside a Teflon lined autoclave container. Next 50mL of ultrapure water is added and the autoclave is sealed. The autoclave cell is loaded into an oven and heated at 200°C for 4 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.796 |
| Cl | 0.103 |
| Ca | 38.275 |
| K | 0.060 |
| **Total alkali (wt.%)*** | **1.121** |

| | |
|---|---|
| **Calculated* as *1.348*Na* + *0.658*1.205*K* | |

### Example 6

A mixture of carbonated glass waste (2.5 g), cement bypass dust (2.5 g) and CaO (2.8 g) is made and milled in a ball mill for 5 minutes using a ball:sample mass ratio of 3. After milling is completed, the material is loaded into a Teflon lined autoclave cell and 50mL of ultrapure water is added. The autoclave cell is loaded into an oven and heated at 200°C for 4 hours. After the treatment is complete the autoclave is cooled to room temperature. Once cool, the cell is opened and the liquid and solid materials are poured onto a 0.2 micron filter. The extraction water is captured for ICP-MS analysis and the solid material is washed with 100mL of ultrapure water (washed on 0.2 micron filter) then dried at 80°C for 24 hours.
The resulting solid material has the following characteristics (elemental composition in wt.% as determined by XRF):

| | |
|---|---|
| Na | 0.000 |
| Cl | 0.188 |
| Ca | 48.338 |
| K | 0.122 |
| **Total alkali (wt.%)*** | **0.097** |

| | |
|---|---|
| *"Calculated* as *1.348*Na* + *0.658*1.205*K* | |

Similar results were achieved using Ca(OH)₂ instead of CaO at the same molar concentration.

## Claims

1. Method for the reduction of the total alkali, chloride and/or sulfate content of a silica-based solid feedstock comprising the steps of
(i) mixing the silica-based solid feedstock with water and a leaching agent to provide a reaction mixture;
(ii) heating the reaction mixture to a temperature within the range of 60-400 °C; and
(iii) subjecting the reaction mixture to a solid-liquid separation and recovering the resulting solid material;
wherein the leaching agent is selected from XO and/or X(OH)₂, wherein X is selected from alkaline earth metals, preferably X is Ca and/or Mg.

2. The method of claim 1 wherein the temperature during step (ii) is within the range of 90-300 °C for at least 30 minutes, preferably at least 60 minutes, preferably within the range of 120-260 °C.

3. The method of any one of the previous claims wherein X is Ca.

4. The method of any one of the previous claims wherein step (i) comprises providing at least part of the total amount of the leaching agent used in the form of a solid composition comprising the leaching agent, and wherein step (i) comprises the steps:
(i)a mixing at least part of said solid composition comprising the leaching agent with at least part of the total amount of the silica-based solid feedstock used to provide a precursor mixture; and
(i)b adding water to the precursor mixer;
wherein step (i)a further comprises submitting the precursor mixture to milling.

5. The method of any one of the previous claims wherein step (i) comprises providing at least part of the total amount of the leaching agent used in the form of a solid composition comprising XO and/or X(OH)₂ in a total combined amount of at least 90 wt.%, preferably at least 93 wt.%, more preferably at least 95 wt.%, or an aqueous solution or suspension thereof.

6. The method of any one of the previous claims wherein step (i) comprises providing at least part of the total amount of the leaching agent used in the form of a solid composition comprising XO and/or X(OH)₂ in a total combined amount of 1-85 wt.%, by weight of the solid composition, preferably 15-80 wt.%, more preferably 30-80 wt.%, or an aqueous solution or suspension thereof.

7. The method of claim 6 wherein step (i) comprises providing at least part of the total amount of the leaching agent used in the form of cement bypass dust, cement kiln dust, lime kiln dust, ash or slag, preferably cement bypass dust.

8. The method of claims 7 wherein step (i) comprises providing at least part of the total amount of the leaching agent used in the form of cement bypass dust, cement kiln dust, lime kiln dust, ash or slag, preferably cement bypass dust, and wherein step (i) comprises the steps:
(i)a mixing at least part of the cement bypass dust, cement kiln dust, lime kiln dust, ash or slag, preferably cement bypass dust, with at least part of the total amount of the silica-based solid feedstock used to provide a precursor mixture; and
(i)b adding water to the precursor mixer;
wherein step (i)a further comprises submitting the precursor mixture to milling.

9. The method of claim 8 wherein step (i)a further comprises providing at least part of the total amount of the leaching agent used in the form of a solid composition comprising CaO and/or Ca(OH)₂ in a total combined amount of at least 90 wt.%, by weight of the solid composition, preferably at least 93 wt.%, more preferably at least 95 wt.%, or an aqueous solution or suspension thereof and mixing said solid composition with the cement bypass dust and with the solid feedstock to obtain the precursor mixture.

10. The method of any of the previous claims wherein
- the reaction mixture of step (ii) comprises the silica-based solid feedstock in an amount of 20-80 wt.%, based on dry weight of the reaction mixture, preferably 30-75 wt.%;
- the reaction mixture of step (ii) comprises the silica-based solid feedstock and the leaching agent at a weight ratio within the range of 5:1 to 1:5, preferably within the range of 3:1 to 1:3, preferably within the range of 2:1 to 1:2; and/or
- the reaction mixture of step (ii) comprises at least 50% water, based on total weight of the reaction mixture, preferably at least 75 wt.% water.

11. The method of any one of the previous claims wherein step (iii) comprises washing the solid material with an aqueous composition such as water.

12. The method of any one of the previous claims wherein the silica-based solid feedstock has a SiO₂ content of at least 30 wt.% (by total weight of the silica-based solid feedstock), preferably at least 50 wt.%; and/or
wherein the silica-based solid feedstock comprises glass, diatomaceous earth, quartz, sand or flint, preferably recycled glass, more preferably recycled soda-lime glass.

13. The method of any one of the previous claims wherein
- the silica-based solid feedstock has a total alkali content calculated as Na₂O wt.% + 0.658*K₂O wt.% of more than 3 wt.%, preferably more than 4.5 wt.%, preferably more than 6 wt.%, and
- the solid material recovered in step (iii) has a total alkali content calculated as Na₂O + 0.658*K₂O of less than 1 wt.%, less than 0.7 wt.%, preferably less than 0.5 wt.%, more preferably less than 0.3 wt.%, more preferably less than 0.1 wt.%, such as less than 0.05 wt.% or less than 0.01 wt.%.

14. The method of any one of the previous claims wherein
- the silica-based feedstock has been carbonated;
- step (ii) further comprises carbonating the reaction mixture; and/or
- a step (iv) carbonating the solid material recovered in step (iii) is performed.

15. A solid material obtainable from step (iii) or step (iv) of the method of any one of the previous claims which has
- a total alkali content calculated as Na₂O wt.% + 0.658*K₂O wt.% of less than 0.05 wt.%, preferably less than 0.005 wt.%, more preferably less than 0.0005 wt.%;
- 20-60 wt.% of Ca, as determined by XRF, preferably 25-57 wt.%, more preferably 32-57 wt.%; and
- 5-25 wt.% of Si, as determined by XRF, preferably 7-20 wt.%, more preferably 9-18 wt.%.
